Europäisches Patentamt

(19) European Patent Office

Office européen des brevets

(11) Publication number: **0 145 195**
**B1**

(12) **EUROPEAN PATENT SPECIFICATION**

(45) Date of publication of patent specification: **07.02.90**

(51) Int. Cl.⁵: **F 16 H 9/24,** F 16 H 55/54,
B 62 M 9/08

(21) Application number: **84307287.7**

(22) Date of filing: **23.10.84**

(54) Expansible chainwheel variable ratio mechanical drive.

(30) Priority: **24.10.83 CA 439603**

(43) Date of publication of application:
**19.06.85 Bulletin 85/25**

(45) Publication of the grant of the patent:
**07.02.90 Bulletin 90/06**

(84) Designated Contracting States:
**DE FR GB NL**

(56) References cited:
**DE-C- 898 105**
**FR-A-1 169 050**
**US-A-3 969 948**

(73) Proprietor: **Weir, Wilfred J.**
**215 Essex Street**
**Sarnia Ontario N7T 4S1 (CA)**

(72) Inventor: **Weir, Wilfred J.**
**215 Essex Street**
**Sarnia Ontario N7T 4S1 (CA)**

(74) Representative: **Archer, Philip Bruce et al**
**Urquhart-Dykes & Lord Trinity Court Trinity**
**Street Priestgate**
**Peterborough Cambridgeshire PE1 1DA (GB)**

Courier Press, Leamington Spa, England.

# EP 0 145 195 B1

**Description**

This invention relates to a non-traction type of input-torque sensitive mechanical drive whose ratio can be continuously varied within its range as defined in the first part of claim 1 and as known from DE—C—898 105. This invention is applicable to stationary and mobile machinery. In an all-mechanical embodiment because of its compactness, it is particularly suitable for chain-driven bicycles, and in a mechanical-hydro-static embodiment because of its low running losses and automatic back-driving, it is suitable for internal combustion (IC) engine powered railway locomotives.

Known transmissions of the continuously variable effective diameter disc type currently in use utilise an expansible chainwheel with plurality of peripheral sprockets shown in USA patents 3,850,044; 3,850,045; 3,867,851. This chain type drive moves a plurality of peripheral driver sprocket axles in radial guideways let into a rotatable plate. Each axle is positioned in its guideway by means of a commonly mounted companion scroll plate. The effective pitch diameter of the chainwheel is changed by relative movement between the radially slotted plate and the scroll plate. The locking of the sprockets to the axle during driving and unlocking during outward movement in the radial guideways is achieved by an axle-mounted backstop clutch in one arrangement, and by spring-centered rotatable teeth segments in another arrangement. Although the device is infinitely variable within its range, the effective chainwheel diameter desired must be selected by hand and foot controls.

In the present application the term "external power train ratio" is defined as the ratio between:
the angle through which the input element rotates, for example, the pedal arm of a bicycle, and
the resultant angle through which the driven output element rotates, for example, a fixed pitch diameter chain driven sprocket mounted on the axle of a bicycle road wheel.

One object of this invention is to provide a non-traction type, infinitely variable external power train ratio within a finite range, which will change the ratio when there is a change in input torque or a decrease in laod.

According to the present invention there is provided a variable ratio power transmission as defined in claim 1.

Embodiments of the invention will now be described by way of example only with reference to the accompanying drawings in which:

Figure 1 is a schematic representation of a conceptual expansible disc,

Figure 2 is a diagrammatic representation of a slider-crank mechanism used in a variable transmission,

Figure 3 is a side elevation view with three cutaway area of an all-mechanical countershaft transmission,

Figure 4 is a side elevation, partly in section, of a mechanical-hydrostatic (IC) engine mounted transmission,

Figure 4a is a sectional view with the left hand side taken on the line a—a of Figure 4 and the right hand side taken on the line b—b of Figure 4,

Figure 5 is a side elevation of a bicycle all-mechanical transmission,

Figure 6 is a section on the line 6—6 of Figure 5.

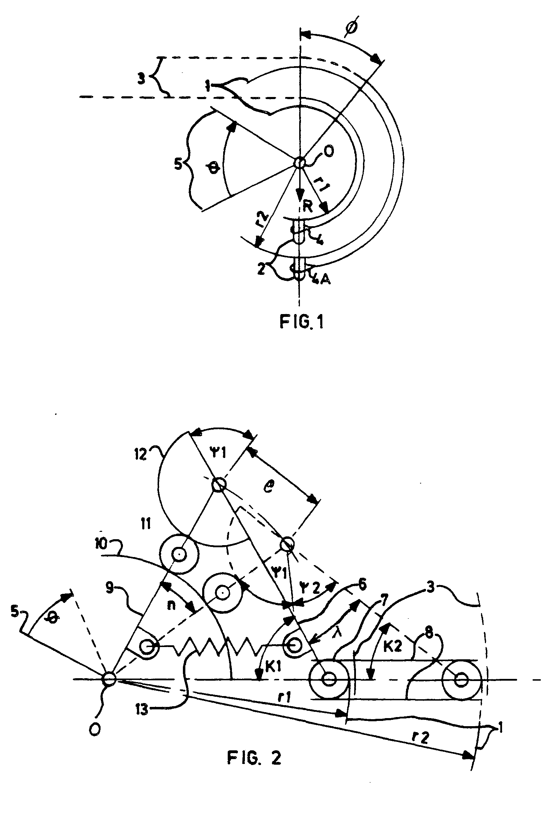

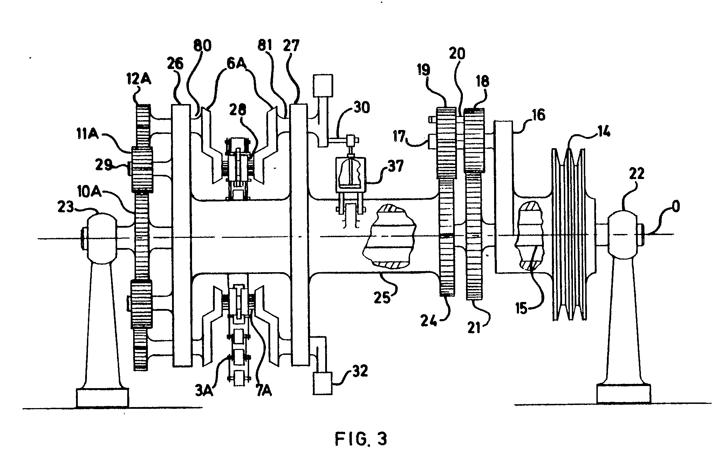

Before considering the embodiments shown in Figures 3 to 6 the theory of the invention will be described with the aid of the schematic diagrams of Figures 1 and 2.

The inventive idea disclosed herein can be better appreciated by considering the following conceptual apparatus.

Work can be done by means of a non-rotative expansible envelope, for example, a cylindrically shaped inflated elastic balloon, if one end of a flexible inelastic element, firmly encircling the middle portion of the outside circumference of the balloon, for example, a string, is glued to the surface of the balloon. Further inflation of the balloon will draw additional string on to the circumference of the balloon, and thereby do mechanical work.

A second method of doing work with the same apparatus would be merely to rotate the balloon on its cylindrical axis in the string-wrapping sense, without further inflation, and thereby do mechanical work.

Mechanical work can therefore be done by the above-described equally-valid methods, herein-after termed:
(a) Non-rotating expansion—Work path 1
(b) Non-expanding rotation—Work path 2.

A compilation of symbols used in this disclosure is as follows:

| | |
|---|---|
| 0 | Input portion rotative angle—degrees |
| | Angle at $r_2$ of additional chain drawn—degrees |
| $U_1$ | Apex of isosceles triangle at $k_1$—degrees |
| $U_2$ | Apex of iso-triangle at $k_2$ minus $U_1$—degrees |
| $r_1$ | Minimum chainwheel radius—mm |
| $r_2$ | $r_1$ plus an increment—mm |
| n | Eta, crank 9 incremental rotation—degrees |
| $k_1$ | Kappa, angle of arm 6 a $r_1$—degrees |
| $k_2$ | Angle $k_1$ minus angle n—degrees |

2

λ     Lambda, arm 9 incremental rotation—degrees
υ     Upsilon, spline line to radial line—degrees
α     Alpha, arc of incremental angle n—mm.

In Figure 1, a non-rotating disc 1 of variable radius R is provided with a prong 2 fixed to its periphery. A nominally inelastic flexible element 3 with a closed loop 4 at one end is anchored by prong 2 to disc 1. Flexible inelastic element 3 is entrained around about half of the periphery of disc 1 and, except for the loop 4, free to slide on the periphery of disc 1. If variable radius R is increased incrementally from $r_1$ to $r_2$, a lineal quantity of flexible element 3 will be drawn on to the periphery of disc 1 through angle Phi, $\varphi$, at final radius $r_2$.

An input torque transmitting torsional element 5 rotates on centre 0 through incremental angle Theta, $\theta$, in the same rotative sense that flexible element 3 is drawn on to expansible disc 1 to produce the change from $r_1$ to $r_2$, a transmission ratio with useful properties obtains, namely, Theta over Phi, ($\theta/\varphi$).

If disc 1 is an expansible chainwheel, ratio $\theta/\varphi$ may be termed, "The Chainwheel Work Path Selection Ratio". If disc 1 is now permitted the additional motion of rotation about centre 0, and prong 2 is considered an instantaneous anchor at the point of disengagement of element 3 with disc 1, then

(a) if the value of ratio $\theta/\varphi$ be less than unity, all input work applied to element 5 would tend to rotate the disc 1, i.e. follow work path 2, based on the principle that mechanical work will follow the path of least resistance, and disc 1 would not expand, under any input torque condition.

(b) If the value of ratio $\theta/\varphi$ is slightly greater than unity, all input work would tend to increase the diameter of the disc, follow Work path 1 to the upper limit of its finite range, if a frictionless means of expansion of the disc 1 were possible, and thereafter rotate the disc 1, i.e. follow Work Path 2,

(c) if the value of ratio $\theta/\varphi$ is greater than unity by a margin sufficient to overcome all mechanical friction in expanding the chainwheel, all input work would initially expand the disc, i.e. follow work path 1, to the upper limit of its finite range and thereafter rotate the disc 1, i.e. follow Work Path 2.

Value (a) of the ratio $\theta/\varphi$ has no practical use in the inventive idea herein disclosed, value (b) has theoretical use in the calculation of ratio boundaries, and value (c) of ratio $\theta/\varphi$ has practical use and may be termed, "The Breakout Value of the Chainwheel Work Path Selection Ratio".

The physical means that form Work Path 1 of the expansible chainwheel is a force-modifying power train having a ratio $\theta/\varphi$ within the range values (c) ratio $\theta/\varphi$ hereinafter termed, "the internal power train".

A device with a force modifying power train having a value of ratio $\theta/\varphi$ falling within the range (c) would have limited practical use because it is merely ratio sensitive, i.e. it will simply expand to its maximum diameter when torque is applied at the input. If an energy storage device, for example, a chain tensioning mechanical spring, is inserted in Work path 1 only, the External Power Train will become sensitive to unbalanced input torque and load conditions caused by a change in input torque or by a decrease in load. This will cause the chainwheel to expand only if the input torque is in excess of the total of the torque requirements of the load, and the spring force and friction of Work Path 1, at any given instant.

The force modifying power train is comprised of three portions in series, an input portion typically torsional element 5, an output portion, including an expansion linkage to vary the diameter of the disc 1, and an intermediate portion, typically an epicyclic gear train, which for simplicity is not shown in Figure 1, which modifies and transmits force between the input and output portions.

Figure 2 shows schematically one of a plurality of linkages used in the output to obtain a variable diameter disc 1. The linkages are spaced apart on a common centre 0, and act to move circumferentially spaced wrist pins 7 in radially-directed paths 8. The linkage includes a crank 9 pivotally connected to an arm 6. For a reason explained later, crank 9 is made equal in length to arm 6.

A spring 13 acts between the crank 9 and arm 6 to bias them toward one another. Each of the pins 7 constitutes one point on the outer surface of the disc 1 so radially outward movement of the pin 7 is effective to increase the diameter of the disc 1. A gear 12 is fixed to arm 6, and a stationary sun gear 10 is mounted on the axis 0. An idler gear 11 mounted on crank 9 meshes with gears 10 and 12, and gear 10 is chosen to be twice the pitch diameter of gear 12.

This gear arrangement avoids the need for guides to direct the pin 7 along radial the path 8, which is desirable because of lubrication difficulties and a large side-thrust component force on the guides when the disc 1 is at a minimum diameter. For an isosceles linkage, i.e. the crank 9 and arm 6 of equal length, the value of the ratio of crank 9 rotative angle Eta, n, to resultant arm 6 rotative angle Psi, $U_2$ is constant, $n/U_2 = 1:2$, i.e. force-reducing during expansion of the disc 1. This is one reason why an isosceles proportion is chosen for the linkage. The resulting three gear isosceles gear train will also cause a constant value ratio $n/U_2$ equal to 1:2. It should be noted that the slider-guide-eliminating gear train is independent of the force modifying power train and, except for friction, does not affect the ratio $\theta/\varphi$ in any way.

Because the magnitude friction forces within the force modifying power train and the chain tensioner are unknown, the minimum practical ratio of $\theta/\varphi$ cannot be directly determined. If a frictionless Work Path 1 is assumed, the theoretical Chainwheel Work Path Selection Ratio $\theta/\varphi$ is unity and Theta equals Phi.

In Figure 1, the relationship between additional engaged chain angle $\varphi$ and chainwheel radii $r_1$ and $r_2$ for 180 degrees of chain and chainwheel engagement can be shown to be:

Eqn. (1):                            $\varphi = 180(r_2 - r_1)r_2$

In Figure 2, the relationship among $(r_2-r_1)/r_2$, crank 9 rotative angle Eta, n, or arm 6 equal rotative angle Lambda, $\lambda$, isosceles equal base angles Kappa, k, and apex angles Psi, $\psi$, is:

Eqn. (2): $\qquad\qquad (r_2-r_1)/r_2=(\cos k_2-\cos k_1)/\cos k_2$

Eqn. (3): $\qquad\qquad k_2=(k_1-n)$

The output portion ratio $n/\varphi$ is sought because the reciprocal ratio $\varphi/n$ equals the ratio required for the intermediate portion of the internal power train, namely, the epicyclic gear train:

Eqn. (4): $\qquad\qquad (\theta/n\times n/\varphi)=\theta/\varphi=1$

combining Equations 1, 2 and 3 and dividing both sides of the resulting Equation by Eta, n:

Eqn. (5): $\qquad\qquad \theta/n=180(\cos(k_1-n))(1-(\cos K_1)/\cos(k_1-n))/n$

The isosceles slider crank linkage ratio $a/(r_2-r_1)$ is variable and force-reducing; between $k_1=90$ and 30 degrees, $a/(r_2-r_1)$ varies between ratio 1:2 and 1:1 respectively. Because the output portion ratio $n/o$ includes ratio $a/(r_2-r_1)$, the epicyclic ratio $\theta/n$ (Eqn. 5), must be calculated at the maximum force-reducing point, the lower limit of the range wherein $r_1=0$ and $k_1=90$ degrees. If incremental angle n is set equal to 1 degree in Equation 5, the value of ratio $\theta/n$ is 3.13:1, force-increasing during expansion of disc 1. This is the minimum theoretical value of the epicyclic gear train ratio which will operate the Internal Power Train and cause the frictionless Work Path 1 to expand the expansible chainwheel.

Operation of the mechanism shown in Figure 1 requires that the flexible element 3 slide freely on the periphery of the expansible disc 1 at all disc engaged points except the instantaneous anchor, prong 2. Because inertia causes coasting to accompany all work done by Work Path 1 or Work Path 2, back-driving of input element 5 is considered desirable. Prong 2 during back-driving would, in a similar way, be considered an instantaneous anchor at the point of engagement of flexible element 3 with disc 1. Prong 2 would back-drive disc 1 and slack in flexible element 3 would be gathered by the linkage driven by the discharge of energy from the energy storage device 13 when disc 1 is contracting.

This effect can be achieved by means of fixable teeth on the periphery of disc 1 in which some teeth become fixed at the point of disengagement only with element 3 when disc 1 is expanding or, some teeth become fixed at the point of engagement only, with element 3 when disc 1 is contracting.

If flexible element 3 is a power transmission chain and some fixable teeth are fixed teeth on the periphery of discrete peripheral-mounted circular fixable sprockets, and disc 1 is an expansible chainwheel, mere points of engagement and disengagement would require an infinite number of peripheral sprockets. The points may be replaced by engagement and disengagement sectors which permit a finite total number of peripheral sprocket sectors in which a sprocket would be, respectively, the last to engage or the next to disengage the chain. The sprocket in these sectors and in no other chain-engaged sectors, would drive or be driven by chain 3.

Over the expansible range of the chainwheel, the nominal variable distance between adjacent peripheral sprockets cannot differ from a full number of links by more than half a link. If the peripheral sprockets are free to rotate through one circular pitch, the change in effective chainwheel diameter which occurs in half a coasting revolution of the chainwheel need not substantially exceed one half a chain pitch betwen any two adjacent sprockets under the practical conditions of three-sprocket chain engagement at any instant.

An all-mechanical first embodiment of this invention is that adapted for use in a countershaft arrangement as shown in Figure 3. Like components to those described above with reference to Figures 1 and 2 will be identified by the same reference numerals with a suffix "A" added for clarity. Figure 3 shows a front elevation view with three cutaway areas of an expansible chainwheel drive with all means necessary to cause expansion of the chainwheel effective diameter except energy storage device 13, and to limit the rate of contraction of the chainwheel effective diameter when the load back-drives the nominal power source.

The energy storage device shown in Figure 2 as a mechanical spring 13, acting in tension between crank 9 and arm 6 is in the embodiment of Figure 3 incorporated with chain 3 as an integral part of the well-known chain tensioning mechanism used to tighten the chain.

The input portion, torsional element 5, in Figures 1 and 2 of the Internal Power Train, is, in Figure 3, comprised of an input pulley 14, freely mounted on stationary but rotatable shaft 15. Fixed to pulley 14 is revolving arm 16 which has a mounting pin 17 fixed near to its radially outer end.

The intermediate portion of the internal power train is a four gear cmpound epicyclic train including two planetary gears 18 and 19 which are freely mounted on mounting pin 17 and are fixed to each other by drive pin link 20. Gear 18 is meshed with epicyclic sun gear 21. The gear 21 is fixed to a shaft 15, which is rotatably mounted in journal bearings 22 and 23. Gear 19 is meshed with epicyclic output gear 24 which is fixed to one end of carrier sleeve 25 freely mounted on shaft 15.

The output portion of the "internal power train" is a plurality of isosceles linkages including two parallel spaced-apart companion flanges 26 and 27 fixed to carrier sleeve 25, in planes normal to the rotational axis of carrier sleeve 25. Rotatively supported on pins 80, 81 between flanges 26 and 27, are a plurality of pairs of circumferentially spaced-apart arms 6A. Respective pairs of arms are joined near one end by splined wrist pin 7A on which is mounted splined centre-apertured sprocket 28 with fixed peripheral teeth. Thus a plurality of sprockets are circumferentially spaced about the periphery of flanges 26, 27. Sprocket 28 is free to rotate on wrist pin 7A through an angle of approximately one tooth circular pitch only. Entrained around a portion of the pitch circle of a substantial number of peripheral sprockets 28 is chain 3A.

A three gear isosceles gear train with fixed ratio of value 1:2 includes an isosceles arm gear 12A attached to the pin 80 on the opposite side of flange 26 to the arm 6A. Arm gear 12A meshes with isosceles idler gear 11A which is free to rotate on pin 29 mounted on flange 26. Idler gear 11A meshes with isosceles sun gear 10A, which is fixed to shaft 15.

An eccentric countermass 32 is fixed on the pin 81 on the opposite side of flange 27 to arm 6A. The countermass 32 extends radially outwardly and is aligned with arm 6A. A cranked pin 30 is fixed to the web of countermass 32 and is positively connected to a pivotally mounted pneumatic retarder dashpot 37 that extends between cranked pin 30 and carrier sleeve 25.

The sequence of operation of this countershaft embodiment of this invention is as follows.

Initially the sprockets 28 are at a minimum diameter so that a numerically low ratio between input and output is obtained. If torque is sufficient, v-belts rotate pulley 14, which in turn rotates arm 16 about shaft 15 and moves mounting pin 17 in a circular pattern. Pin 17 orbits gear 18 around sun gear 21 and the rotation of gear 18 is transmitted through drive pin link 20 to rotate gear 19 on mounting pin 17. The difference in diameter between the gears 18, 19 causes a differential rotation of output gear 24 and carrier sleeve 25, in the opposite sense to rotation of pulley 14. Its flanges 26 and 27 rotate with gear 24, the arm gear 12A and idler gear 11A are orbitted around stationary isosceles sun gear 10A. Idler gear 11A, meshed with gear 10A and gear 12A, causes gear 12A to rotate on its own centre which swings the arms 6A outward. By this combined motion, sprockets 28 are urged outward in radial paths, thereby drawing chain 3A on to the expanding chainwheel circumference.

If the load on chain 3 is increased or input torque decreased, outward movement of the arms 6A stalls, causing the rotation of pulley 14 to be transmitted to the shaft 15. All components supported by journal bearings 22 and 23 rotate at the same speed as shaft 15 causing all work to be done through Work Path 2 with a ratio determined by the final radial position of the sprockets 28.

If the speed of input pulley 14 is decreased, inertial tension in chain 3A urges sprockets 28 inward in radial paths to decrease the drive ratio. This motion is retarded by pneumatic dashpot 37, therefore back-driving occurs without an abrupt increase in input pulley 14 speed.

If the speed of carrier sleeve 25 is equal to the speed of the input pulley 14, only coasting occurs, and no substantial work is done through Work Path 2.

If a high inertia load, for example, a railway train, is drawn by a locomotive powered by an engine which must be started without load, for example, an IC, compression-ignition engine, a friction-type clutch would be unsatisfactory. If a hydrokinetic clutch is placed between the IC engine and the expansible chainwheel drive shown in Figure 3, clutch heat dissipation would be improved, but this method incurs either continuous fluid turbulence losses, or mechanical lock-up facilities and more complex controls.

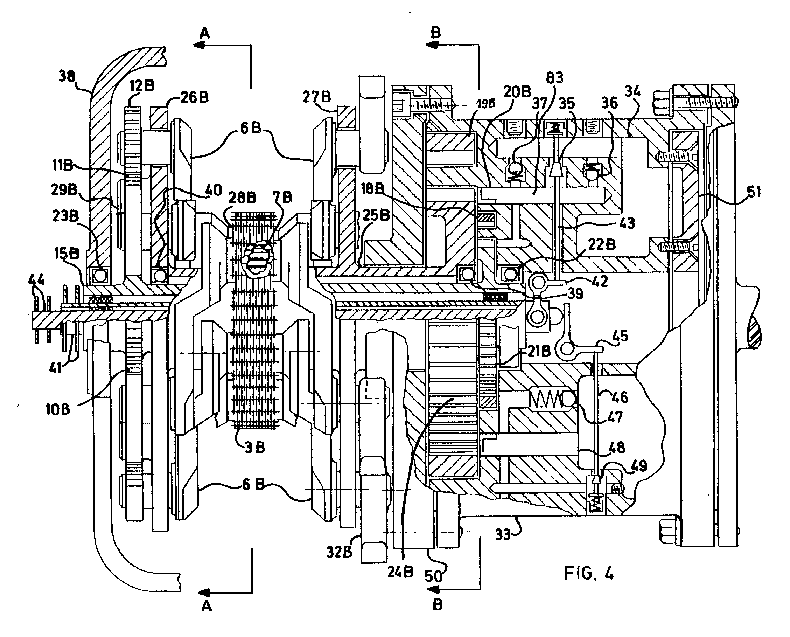

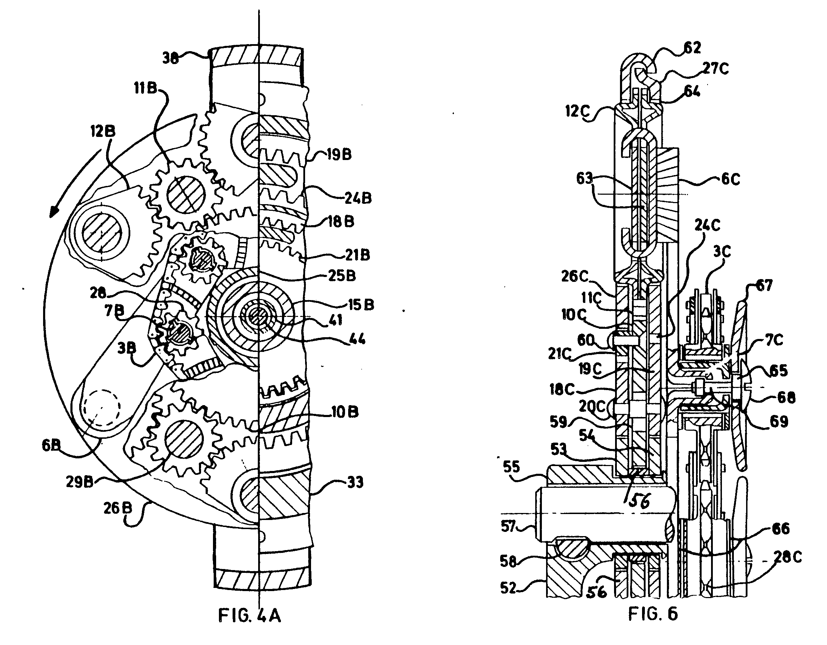

A simpler method is shown in Figures 4 and 4a in which the intermediate components have been modified to include hydrostatic circuitry which provides, in addition to ratio change, IC engine clutching, engine overload protection, and control of the rate of chainwheel contraction during back-driving by the load. Like components to those described above will be denoted by similar reference numerals with a suffix added for clarity.

The rigid pin link 20 shown in Figure 3 is replaced by a disconnectable hydrostatic link 20B, Figure 4, and the four gear compound epicyclic gear train, (18, 19, 21, 24 in Figure 3) is modified to form a four-gear hydrostatic drive, for example, a crescent-type gear pump and pump-motor of the gear-in-gear class with this arrangement pumping losses would be greatest when the railway train is stationary and the IC engine idling, and least when the train is at balancing speed and all work is done through Work Path 2.

Described in Work Path 1 mode, Figures 4 and 4a show side and end elevations respectively with cutaway sectional views, including all means necessary except spring 13, Figure 2, to cause chainwheel expansion, and retardation of chainwheel contraction during engine back-driving. The direction-of-rotation arrow shown in Figure 4a is the engine output flange rotation.

All hydraulic elements are carried in a common housing 33, fixed to the rotating power output flange of the engine. A small diameter, small tooth-face area, gear 21B is fixed to rotatable hollow shaft 15B and meshed with internal ring gear 18B forming a small volume-per-revolution, high pressure crescent gear pump with its inlet connected to a rotating fluid reservoir 34 through check valve 47. The output is joined to disconnectable header 83 of hydrostatic link 20B. A large pitch diameter, large tooth-face area, output gear 24B is fixed to carrier sleeve 25B and meshed with internal ring gear 19B forming a large volume-per-revolution, low pressure crescent gear pump-motor also connected to header 83 of link 20B and connected to reservoir 34 through unrestricted passage 48. Connecting header 83 to reservoir 34 is a power engaging valve 35. By-passing power engaging valve 35 is a pressure relief valve 36 and vacuum-breaker check valve 37. By-passing check valve 47 is a chainwheel contraction retarder, back-driving valve 49.

Rotatable hollow shaft 15B is mounted in two journal bearings 22B and 23B. One bearing 22B is supported in housing 33 and the other bearing 23B is supported by frame extension 38 of the engine crankcase. Carrier sleeve 25B is supported on hollow shaft 15B by two journal bearings 39 and 40. Concentrically mounted within hollow shaft 15B and rotating with housing 33, with means for axial movement, is a shifting collar and sleeve 41, which actuates fork 42 and power-engaging valve stem 43. Mounted within shifting collar and sleeve 41, and free to rotate with housing 33 is an axially movable shifting collar and rod 44, operating bell crank 45 and back-driving valve stem 46. A cover plate 50 and cover ring 51 hydraulically seals housing 33.

Companion flanges 26B and 27B, paired arms 6B, splined wrist pin 7B, sprockets 28B, gear 12B, idler gear 11B, idler pin 29B, arm countermass 32B, silent chains 3B and isosceles sun gear 10B are arranged substantially as described for Figure 3.

The difference in pitch diameter of gears 21B and 24B is so chosen that, notwithstanding the common input torque to both pump and pump-motor, the high pressure pump will have sufficiently higher net pressure to cause the low pressure pump-motor to operate as a motor under Work Path 1 conditions.

The difference in net fluid volume-per-revolution between the pump and pump-motor is so chosen that the hydraulic ratio between them is, less slippage, equivalent to the mechanical ratio provided by the epicyclic Gear Train described for Figure 3.

The sequence of operation of the mechanical-hydrostatic embodiment shown in Figure 4 is as follows:

The IC engine is started with power-engaging valve 35 open, and rotation of housing 33 causes fluid to be drawn from reservoir 34, flow through both pump and pump-motor in parallel to discharge into header 83 to return to reservoir 34 through open valve 35. Gears 21B and 24B remain stationary and no substantial force be transmitted to chain 3B.

When power-engaging valve 35 is closed, fluid pressure rises in header 83 and torque appears at gears 21B and 24B. If the transient load is excessive, pressure relief valve 36 opens and some energy is dissipated by pumping losses until the starting load force equals the seating force of the spring in relief valve 36. All elements of the expansible chainwheel then rotate in unison and all work is done through Work Path 2 at the lower limit of the expansible range. If engine torque is increased above load demand, the high pressure pump causes the low pressure pump to motor, relative motion occurs between gears 21B and 24B, and fluid discharges through unrestricted passage 48 to reservoir 34. The chainwheel thereby expands and work is done through Work Path 1 to the upper limit of the range.

If the engine speed is less than load speed, reverse relative motion occurs between gears 21B and 24B, but only at the rate that fluid is permitted to flow in series from reservoir 34, through the low pressure pump-motor and the high pressure pump to reservoir 34, by the orifice setting of back-driving valve 49.

Controlled contraction of the chainwheel permits of engine braking of the load at nearly constant engine speed within the limits of the expansible range. Flow control devices are arranged in Figure 4 for maximum clarity of function and, in practice, would be so positioned that centrifugal force is minimum on movable components.

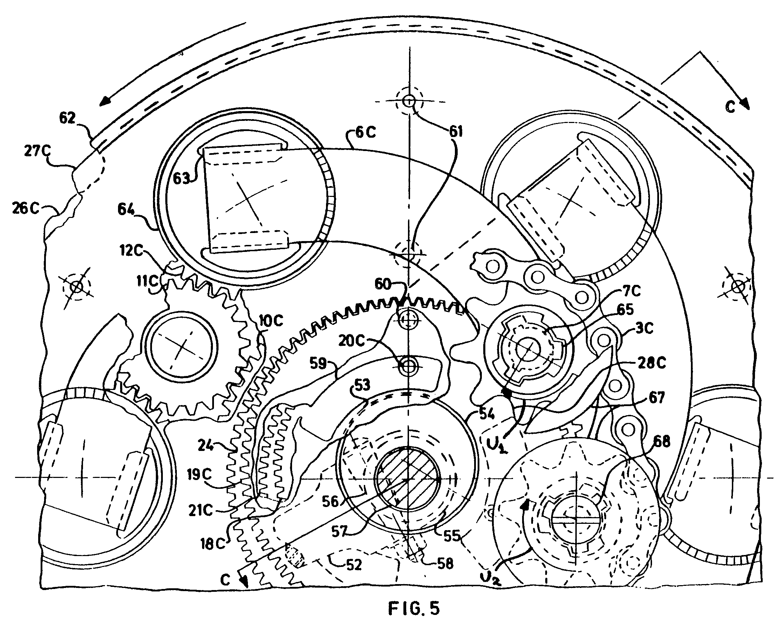

An all-mechanical third embodiment of this invention is that adapted for use in a man-powered vehicle arrangement. Figure 5 shows a front elevation with cutaway areas and a cross-sectional end view of the expansible chainwheel drive with all means necessary except chain-mounted spring 13, to cause expansion of the effective diameter of the chainwheel within the limits of the expansible range.

The input portion of the internal power train in the embodiment of Figure 5 includes:

a pedal connected to pedal crank 52 which has a hub 55 fixed to rotatable hanger shaft 57 by cotter pin 58. Fixed to hub 55 are two spaced-apart equal throw eccentrics 53 and 54. The crank 52 is disposed at 180° to the maximum throw of eccentrics 53 and 54 and mounted between the eccentrics 53 and 54 and fixed to hub 55 is journal ring 56.

The intermediate and output portions of the Internal Power Train includes an isosceles sun gear 10C rotatively and concentrically mounted on journal ring 56 and supported between eccentrics 53 and 54. Two spaced-apart companion carrier flanges 26C and 27C are separated by and laterally supported by sun gear 10C. One flange 26C is concentrically and rotatively mounted on the outside diameter of a circular shoulder fixed to one side of sun gear 10C. Carrier flanges 26C and 27C are fixed to each other and laterally spaced apart by carrier shouldered drive pins 61 and crimped and offset interlocked outside edges 62 of carrier flanges 26C and 27C.

A plurality of idler gears 11C circumferentially spaced apart about the rotative centre of shaft 57 are rotatively mounted between carrier flanges 26C and 27C. A plurality of arm gears 12C circumferentially spaced apart about the rotative centre of shaft 57 are rotatably mounted between carrier flanges 26C and 27C. Each idler gear 11C meshes with two arm gears 12C and sun gear 10C. Formed in the web of arm gear 12C are two spokes 63, radially positioned 180 degrees apart on arm gear centre. Spokes 63 are encompassed by a male journal bearing rotatively supported within two female journal bearings 64, let into carrier flanges 26C and 27C. For ease of assembly, bearing 64 is of a diameter that will pass through sprocket 28C. Arm 6C is fixed near one end to arm gear 12C by capturing lugs of arm 6C formed around the edges of spokes 63. The teeth of pitch gear, spokes 63, and the male journal bearing, of arm gear 12C, are preferentially formed by two inward-facing identical stampings fixed together by arm 6C capturing lugs. Near the other end of arm 6C is formed an outward-facing boss 7C. Formed on boss 7C are symmetrically spaced-apart splines. Encompassing and fixed to splined boss 7C is mating splined replaceable thimble 65.

Orientation of the splines formed on the boss 7C relative to the arm 6C on which boss 7C is formed, is substantially different for each arm 6C. Encompassing thimble 65 is a centre-apertured peripheral circular sprocket 28C; mating splineways in the centre aperture are substantially wider than the spline widths of thimble 65. On each side of the hubs of sprocket 28C are one non-rotating internally splined washer 66. Limiting axial movement of outer washer 66 is chain guard flange 67, a retaining shouldered bolt 68 and nut 69 centrally locates and captures flange 67, boss 7C, thimble 65 and washers 66. Entrained around a portion of the pitch circle of approximately three peripheral sprockets is chain 3C. The intermediate portion of the Internal Power Train is an epicyclic compound gear train comprised of: two planetary gears 18C and 19C. Gear 18C is rotatably mounted on the outside diameter of eccentric 53 and gear 19C is rotatably mounted on the outside diameter of eccentric 54. Gears 18C and 19C are laterally supported and separated by the web of isosceles sun gear 10C. Gears 18C and 19C are fixed to each other and spaced apart by three shouldered link pins 20C, link pins 20C connect gears 18C and 19C through interspoke apertures 59 let into the web of isosceles sun gear 10C. Concentrically fixed to one side of the web of gear 10C and meshed with planetary gear 18C is an internally toothed epicyclic sun ring gear 21C. The outside diameter of gear 21C is the circular shoulder which rotatably supports flange 26C. Formed on the inside diameter of carrier flange 27C is an internally toothed epicyclic output gear 24C which meshes with planetary gear 19C.

The sequence of operation of the man-powered embodiment shown in Figure 5 is as follows:

If input torque in pedal crank 52 exceeds the total of load, friction an spring torque in Work Path 1, and the expansible chainwheel is not at the upper limit of its range, hub 55 rotates eccentrics 53 and 54 on each side of sun gear 10C. Eccentric 53-drives planetary gear 18C which meshes with epicyclic sun gear 21C. The sun gear 18C rotates on its centre and isosceles pins causes eccentric 54 to rotate and drive planetary gear 19C in unison with gear 18C. Planetary gear 19C meshes with epicyclic internal output gear 24C and causes gear 24C and thereby rear carrier flange 27C to rotate relative to isosceles gear 10C in the opposite sense to the rotation of pedal crank 52. Flange 27C rotates front flange 26C by means of shouldered pins 61 and interlocked outside edges 62. Flanges 26C and 27C orbit idler gears 11C and arm gears 12C around gear 10C and idler gears 11C rotate arms. The resulting combined motion causes bosses 7C to move in radially outward paths. Sprocket 28C in the disengagement sector is locked to thimble 65, and additional chain 3C is drawn on to the periphery of the expanding chainwheel.

On bicycles fitted with a reverse free-wheeling road wheel rear driven sprocket, chainwheel contraction be obtained by means of inertia and a rapid back-pedal action by the cyclist. If the rear driven sprocket is fixed to the road wheel, the retarding action of dashpot 31, Figure 3, may be obtained by means of a modified gas spring, swivel-mounted between sun gear 21 and carrier front flange 26, and arranged to go by pedal arm 52.

To fix the peripheral sprocket and thereby the fixable teeth in the chain engagement or disengagement sectors only, the orientation of the splines on thimble 65, relative to a straight line through the chainwheel rotative centre 0 and the thimble 65 centre, is substantially different for each thimble. Because the thimble 65 is mounted on arm 6C, this orientation can be more conveniently considered relative to a straight line through arm gear 12C centre and thimble 65 centre, and its angle to a straight line passing centrally through one spline and thimble 65 centre of the same arm. This angle increases at a uniform rate in a clock-wise direction from arm 6C line to the central spline when proceeding around the stationary chainwheel in a clock-wise direction until one circuit is completed. Thus, in Figure 5, angle Upsilon, $U_2$ is greater for rotatively trailing arm 6C than angle $U_1$ for rotatively leading arm 6C.

For example, if a total of six peripheral sprockets are uniformly spaced apart around the periphery of an expansible chainwheel, the engagement or disengagement sectors will occupy $360°/6 = 60$ degrees each. If the peripheral sprockets each have 9 teeth uniformly spaced around the sprocket pitch circle, one circular pitch lost motion will be $360°/9 = 40$ degrees of sprocket rotation. If the number of uniformly spaced lost-motion splineways within the centre apertured sprocket is 3, the splineways can be symmetrically related to the 9 teeth on the pitch circle of the peripheral sprocket. The mating splines on the thimble is uniformly spaced at $360°/3 = 120$ degrees. If one spline width occupies 30 degrees, each thimble spline orientation can differ from adjacent thimbles by $(120° - 30°)/6 = 15$ degrees.

Thus, the regressive relationship between splined thimble 65 and arms 6C when sprocket 28C drives chain 3C, becomes a progressive relationship when chain 3C drives sprocket 28C.

## Claims

1. A variable ratio power transmission of the form having a power input (14), a flexible inextensible member (3A), and including a transmission device having a variable operating diameter to vary the ratio between said input and a power output to be driven by said inextensible member, a first drive path (14, 16, 17, 19, 24, 25, 27, 81, 6A, 7A, 3A) interconnecting said input and output and a second drive path (14, 16, 17, 18, 21, 15, 10A, 11A, 12A, 80, 6A, 7A, 3A) interconnecting said input and output, resilient means to provide progressive resistance to expansion of said transmission device, wherein said operating diameter is defined by a plurality of sprockets (28) engageable with said flexible inextensible member entrained about said sprockets, each of said sprockets is radially movable outwardly relative to said rotatinal axis and each of said sprockets is mounted on an arm (6A) for limited rotational movement relative thereto to accommodate changes in spacing between adjacent sprockets as said transmission device changes

EP 0 145 195 B1

diameter, characterized in that said first and second drive paths are operable independent of one another, said first drive path is provided exclusively to cause rotation of said transmission device, each of said sprockets is constrained to movement along a radial vector and said second drive path is provided exclusively to displace said sprockets along said radial vector to vary the diameter of said transmission device, and a torque transmitting device (10A, 11A, 12A, 15, 14, 16, 17, 18, 19, 20, 21, 24, 25, 26, 27) connecting said input to both said first and second drive paths to provide a mechanical advantage to said second drive path over said first drive path, said first and second drive paths being interconnected such that input power flows through said second drive path to expand said transmission device until balanced by said resilient means and subseuently flows through said first drive path.

2. A transmission device according to claim 1 wherein said sprockets are mounted on said arms such that said limited rotational movement is unique to each sprocket.

3. A transmission device as defined in claim 2 wherein a retarding means (37) is operable upon said sprockets to retard inward movement thereof along said radial vector to reduce the diameter of said transmission device.

4. A transmission device according to claim 1 wherein said torque transmitting device includes an epicyclic gear train (10A, 11A, 12A, 18, 19, 21, 24) to provide said mechanical advantage, including a plurality of said arms (6A) to which a respective sprocket (28) is rotatably mounted at a first location, said arms being moved radially outwardly upon relative movement between components of said gear train associated respectively with said first and second drive paths.

5. A transmission device according to claim 4 wherein said arms (6A) are rotatably mounted on a carrier (25, 26, 27), said carrier being rotatably mounted on a shaft member (15) such that the central axis of said shaft and said first location are equidistant from said second location and said epicyclic gear train (10A, 11A, 12A, 18, 19, 21, 24) acts between said arms (6A) and said shaft member (15) to cause radial movement of said arms upon relative rotation between said carrier (25 26, 27) and said shaft member.

6. A transmission device according to claim 5 wherein said epicyclic gear train includes a gear (10A) connected to said shaft member (15), a gear (12A) mounted on said arm (6A) and an idler gear (11A) rotatably supported on said carrier in torque transmission relationship with said gears (10A, 12A) to cause movement of said arm upon relative movement between said carrier and said shaft member (15).

7. A transmission device according to claim 1 wherein said first and second drive paths are interconnected by a hydraulic transmission to provide said mechanical advantage.

## Patentansprüche

1. Leistungsgetriebe mit variablem Übersetzungsverhältnis mit einem Leistungseingang (14), einem flexiblem, nicht dehnbaren Glied (3A) und einer Übertragungseinrichtung mit einem variablen Arbeitsdurchmesser, um das Verhältnis zwischen Eingang und einem Leistungsausgang, der durch das nicht dehnbare Glied angetrieben wird, zu variieren, einem ersten Antriebspfad (14, 16, 17, 19, 24, 25, 27, 81, 6A, 7A, 3A), welcher den Eingang und den Ausgang miteinander verbindet, und einem zweiten Antriebspfad (14, 16, 17, 18, 21, 15, 10A, 11A, 12A, 80, 6A, 7A, 3A), der den Eingang und den Ausgang miteinander verbindet, elastischen Einrichtungen, die einen progressiven Widerstand gegen eine Ausdehnung der Übertragungseinrichtung vorsehen, wobei der Betriebsdurchmesser durch eine Vielzahl von Kettenzahnrädern (28) bestimmt ist, die mit dem flexiblen, nicht dehnbaren Glied in Eingriff bringbar sind, welches um die Kettenzahnräder mitgezogen wird, jedes der Kettenzahnräder radial nach außen relativ zur Drehachse beweglich ist und jedes der Kettenzahnräder auf einem Arm (61) für eine begrenzte Drehbewegung relativ zu diesem angebracht ist, um Änderungen im Abstand zwischen benachbarten Kettenzahnräder aufzunehmen, wenn die Übertragungseinrichtung den Durchmesser ändert, dadurch gekennzeichnet, daß der erste und zweite Antriebspfad unabhängig voneinander betätigbar sind, daß der erste Antriebspfad ausschließlich vorgesehen ist, eine Drehung der Übertragungseinrichtung vorzusehen, wobei jedes der Kettenzahnräder zu einer Bewegung entlang einem radialen Vektor gezwungen ist, und daß der zweite Antriebspfad ausschließlich vorgesehen ist, die Kettenzahnräder entlang dem radialen Vektor zu versetzen, um den Durchmesser der Übertragungseinrichtung zu variieren, wobei eine Drehmomentenübertragungseinrichtung (10A, 11A, 12A, 15, 14, 16, 17, 18, 19, 20, 21, 24, 25, 26, 27) den Eingang sowohl mit dem ersten als auch dem zweiten Antriebspfad verbindet, um einen mechanischen Nutzen bzw. mechanischen Wirkungsgrad des zweiten Antriebspfades gegenüber dem ersten Antriebspfad vorzusehen, und wobei der erste und zweite Antriebspfad so miteinander verbunden sind, daß die Eingangsleistung durch den zweiten Antriebspfad verläuft, um die Übertragungseinrichtung auszudehnen bis sie durch die elastischen Mittel im Gleichgewicht ist, und nachfolgend durch den ersten Antriebspfad verläuft.

2. Getriebeeinrichtung nach Anspruch 1, in welcher die Kettenzahnräder auf den Armen so angebracht sind, daß jedem Kettenzahnrad eine ihm eigene begrenzte Drehbewegung zugeordnet ist.

3. Getriebeeinrichtung nach Anspruch 2, in welcher eine Verzögerungseinrichtung (37) auf den Kettenzahnrädern in Betrieb setzbar ist, die die Einwärtsbewegung von diesen entlang dem radialen Vektor verzögert, um den Durchmesser der Übertragungseinrichtung zu verringern.

4. Getriebeeinrichtung nach Anspruch 1, in welcher die Drehmomentenübertragungseinrichtung einen

8

epizyklischen Getriebezug bzw. eine Planetengetriebegruppe (10A, 11A, 12A, 18, 19, 21, 24) umfaßt, um den mechanischen Wirkungsgrad vorzusehen, einschließlich einer Mehrzahl von Armen (6A), an welchen jeweils ein zugeordnetes Kettenzahnrad (28) an einem ersten Ort drehbar angebracht ist, wobei die Arme radial auswärts bewegbar sind auf eine relative Bewegung zwischen Komponenten der Getriebegruppe hin, die dem ersten bzw. zweiten Antriebspfad zugeordnet ist.

5. Getriebeeinrichtung nach Anspruch 4, in welcher die Arme (6A) an einem Träger (25, 26, 27) drehbar angebracht sind, wobei der Träger an einem Wellenglied (15) derart drehbar angebracht ist, daß die Mittelachse der Welle und der erste Ort äquidistant von dem zweiten Ort sind und daß die Planetengetriebegruppe (10A, 11A, 12A, 18, 19, 21, 24) zwischen den Armen (6A) und dem Wellenglied (15) wirksam ist, um eine Radialbewegung der Arme auf eine relative Drehung zwischen dem Träger (25, 26, 27) und dem Wellenglied hin hervorzurufen.

6. Getriebeeinrichtung nach Anspruch 5, in welcher die Planetengetriebegruppe ein Zahnrad (10A), welches mit dem Wellenglied (15) verbunden ist, ein Zahnrad (12A), welches an dem Arm (6A) angebracht ist, und ein Leerlaufzahnrad (11A) umfaßt, welches an dem Träger in einer Drehmomentenübertragungsbeziehung mit den Zahnrädern (10A, 12A) drehbar abgestützt ist, um eine Bewegung des Armes auf eine Relativbewegung zwischen dem Träger und dem Wellenglied (15) hin hervorzurufen.

7. Getriebeeinrichtung nach Anspruch 1, in der der erste und zweite Antriebspfad durch ein Hydraulikgetriebe untereinander verbunden sind, um den mechanischen Nutzen vorzusehen.

## Revendications

1. Transmission de puissance à rapport variable du type comprenant une entrée de puissance (14), un organe flexible non extensible (3A), et comportant un dispositif de transmission qui a un diamètre de travail variable de manière à modifier le rapport entre ladite entrée et une sortie de puissance à entraîner par ledit organe non extensible, un premier chemin d'entraînement (14, 16, 17, 19, 24, 25, 27, 81, 6A, 7A, 3A) interconnectant ladite entrée et ladite sortie et un deuxième chemin d'entraînement (14, 16, 17, 18, 21, 15, 10A, 11A, 12A, 80, 6A, 7A, 3A) interconnectant ladite entrée et ladite sortie, des moyens élastiques pour opposer une résistance progressive à l'expansion dudit dispositif de transmission, dans laquelle ledit diamètre de travail ets défini par une pluralité de pignons (28) venant en prise avec ledit organe flexible non extensible entraîné autour desdits pignons, chacun desdits pignons est radialement déplaçable vers l'extérieur par rapport audit axe de rotation et chacun desdits pignons est monté sur un bras (6A) pour un mouvement de rotation limité par rapport à celui-ci de manière à absorber les variations d'espacement entre les pignons adjacents lorsque ledit dispositif de transmission change de diamètre, caractérisée en ce que lesdits premier et deuxième chemins d'entraînement peuvent agir indépendamment l'un de l'autre, ledit premier chemin d'entraînement est prévu exclusivement pour provoquer la rotation dudit dispositif de transmission, chacun desdits pignons est limité à un mouvement le long d'un vecteur radial et ledit deuxième chemin d'entraînement est prévu exclusivement pour déplacer lesdits pignons le long dudit vecteur radial afin de modifier le diamètre dudit dispositif de transmission, et un dispositif de transmission de couple (10A, 11A, 12A, 15, 14, 16, 17, 18, 19, 20, 21, 24, 25, 26, 27) reliant ladite entrée à la fois auxdits premier et deuxième chemins d'entraînement de manière à donner un avantage mécanique audit deuxième chemin d'entraînement par rapport audit premier chemin d'entraînement, les dits premier et deuxième chemins d'entraînement étant interconnectés de sorte que la puissance d'entrée se transmet par l'intermédiaire dudit deuxième chemin d'entraînement, afin de provoquer l'expansion dudit dispositif de transmission jusqu'à ce qu'il soit équilibré par lesdits moyens élastiques, et elle se transmet ensuite par l'intermédiaire dudit premier chemin d'entraînement.

2. Dispositif de transmission suivant la revendication 1, dans lequel lesdits pignons sont montés sur lesdits bras de sorte que ledit mouvement de rotation limité est spécifique à chaque pignon.

3. Dispositif de transmission suivant la revendication 2, dans lequel des moyens de retardement (37) agissent sur lesdits pignons pour retarder leur mouvement vers l'intérieur le long dudit vecteur radial afin de réduire le diamètre dudit dispositif de transmission.

4. Dispositif de transmission suivant la revendication 1, dans lequel ledit dispositif de transmission de couple comprend un train d'engrenages épicycloïdaux (10A, 11A, 12A, 18, 19, 21, 24) pour engendrer ledit avantage mécanique, comportant une pluralité de dits bras (6A) sur lesquels un pignon respectif (28) est monté de façon tournante à une première position, lesdits bras étant déplacés radialement vers l'extérieur lors d'un mouvement relatif entre les composants dudit train d'engrenages associés respectivement auxdits premier et deuxième chemins d'entraînement.

5. Dispositif de transmission suivant la revendication 4, dans lequel lesdits bras (6A) sont montés de façon tournante sur un organe porteur (25, 26, 27), ledit organe porteur étant monté de façon tournante sur un arbre (15) de sorte que l'axe central dudit arbre et ladite première position sont équidistants de ladite deuxième position, et ledit train d'engrenages épicycloïdaux (10A, 11A, 12A, 18, 19, 21, 24) agit entre lesdits bras (6A) et ledit arbre (15) pour engendrer un mouvement radial desdits bras lors d'une rotation relative entre ledit organe porteur (25, 26, 27) et ledit arbre.

6. Dispositif de transmission suivant la revendication 5, dans lequel ledit train d'engrenages épicycloïdaux comprend un pignon (10A) connecté audit arbre (15), un pignon (12A) monté sur ledit bras (6A) et un pignon fou (11A) supporté de façon tournante sur ledit organe porteur en relation de transmission de couple avec lesdits pignons (10A, 12A) pour engendrer un mouvement dudit bras lors d'un mouvement relatif entre ledit organe porteur et ledit arbre (15).

7. Dispositif de transmission suivant la revendication 1, dans lequel lesdits premier et deuxième chemins d'entraînement sont interconnectés par une transmission hydraulique pour créer ledit avantage mécanique.

FIG. 1

FIG. 2

FIG. 3

FIG. 4

FIG. 6

FIG. 4.A

FIG. 5